# EUROPÄISCHE PATENTSCHRIFT

(11) **EP 4 026 229 B1**
(45) Veröffentlichungstag und Bekanntmachung des Hinweises auf die Patenterteilung: **01.01.2025**
(21) Anmeldenummer: 20774869.0
(22) Anmeldetag: 07.08.2020
(51) Int. Cl.: H02K 1/276, H02K 1/30, H02K 15/03

(54) **BLECHRING FÜR EIN ROTORBLECHPAKET EINES ROTORS EINER ELEKTRISCHEN MASCHINE UND VERFAHREN ZUR HERSTELLUNG EINES ROTORBLECHPAKETS AUS MEHREREN BLECHRINGEN**
LAMINATION RING FOR A LAMINATED ROTOR CORE OF A ROTOR OF AN ELECTRIC MACHINE, AND METHOD FOR PRODUCING A LAMINATED ROTOR CORE MADE OF MULTIPLE LAMINATION RINGS
ANNEAU EN TÔLE POUR UN PAQUET DE TÔLES ROTORIQUES D'UN ROTOR D'UNE MACHINE ÉLECTRIQUE ET PROCÉDÉ DE FABRICATION D'UN PAQUET DE TÔLES ROTORIQUES À PARTIR DE PLUSIEURS ANNEAUX EN TÔLE

(30) Priorität: 02.09.2019 DE 102019123434
(43) Veröffentlichungstag der Anmeldung: 13.07.2022
(73) Patentinhaber: Schaeffler Technologies AG & Co. KG, 91074 Herzogenaurach (DE)
(72) Erfinder: WISBAR, Patrick, 76437 Rastatt (DE)
(86) Internationale Anmeldenummer: PCT/DE2020/100696
(87) Internationale Veröffentlichungsnummer: WO 2021/043362

(56) Entgegenhaltungen:
- EP-A1- 3 410 571
- DE-A1- 102012 006 169
- US-A1- 2013 162 099

## Beschreibung

Die Erfindung betrifft ein Rotorblechpaket eines Rotors einer elektrischen Maschine. Das Rotorblechpaket ist aus einer Vielzahl von gestapelten Blechringen aufgebaut.

Ferner betrifft die Erfindung ein Verfahren zur Herstellung eines Rotorblechpakets aus mehreren Blechringen für einen Rotor einer permanenterregten elektrischen Maschine.

Die deutsche Offenlegungsschrift DE 10 2009 052 596 A1 betrifft einen Rotor einer elektrischen Maschine, der aus Einzelsegmenten gebildet ist. Jedes Einzelsegment weist einen ersten Teil auf, der in zusammengebautem Zustand mit einem zweiten korrespondierenden Teil des benachbarten Einzelsegments formschlüssig verbunden ist, so dass sich in Umfangsrichtung eine selbsttragende Ringstruktur des zusammengebauten Rotors ausbildet. Jedes Einzelsegment besitzt eine Öffnung für einen Permanentmagneten.

Die deutsche Offenlegungsschrift DE 10 2010 005 490 A1 offenbart einen Rotor einer elektrischen Maschine, der über Einzelsegmente und einen Rotorträger verfügt. Die Einzelsegmente sind formschlüssig mit dem Rotorträger verbunden.

Die deutsche Offenlegungsschrift DE 10 2011 018 619 A1 betrifft eine Blechpaketanordnung für einen Rotor einer elektrischen Maschine, insbesondere einer permanentmagneterregten Synchronmaschine eines Fahrzeugs, mit einer Vielzahl von aufeinander gestapelten Blechschichten. Jede Blechschicht besteht aus zumindest zwei kreisringsegmentförmigen Blechteilen, die in Umfangsrichtung über jeweilige Stirnseiten mittels einer Verbindungsanordnung miteinander verbunden sind. Die Verbindung der einzelnen Blechschichten der Blechpaketanordnung kann über eine Vernietung oder Verschraubung erfolgen.

Die deutsche Offenlegungsschrift DE 10 2011 115 159 A1 betrifft ein Ringelement für eine elektrische Maschine. Das erste Ringsegment und wenigstens ein zweites Ringsegment sind zum Haltern wenigstens eines Magneten der elektrischen Maschine miteinander verbunden. Die Ringsegmente sind mittels des Magneten miteinander verbunden. Ferner können an den Stoßstellen der benachbarten Ringsegmente formschlüssig zusammenwirkende Verbindungselemente ausgebildet sein.

Die deutsche Offenlegungsschrift DE 10 2012 019 182 A1 betrifft eine Verbindungsanordnung wenigstens eines ersten Ringsegments an wenigstens einem zweiten Ringsegment eines Ringelements für eine elektrische Maschine. In axialer Richtung werden die Ringsegmente mittels wenigstens einer jeweiligen plastischen Verformung der Ringsegmente des Ringelements gegenseitig fixiert.

Das europäische Patent EP 2 466 732 B1 offenbart ein Herstellungsverfahren eines laminierten Rotorkörpers. Die bandförmigen Kernbleche weisen eine Vielzahl von Pol-Abschnitten auf, die radial nach außen vorstehen. Die bandförmigen Kernbleche werden in der Weise übereinadergelegt, dass die Pol-Abschnitte miteinander ausgerichtet sind.

Die deutsche Offenlegungsschrift DE 10 2017 2014 38 offenbart eine Blechpaketscheibe für einen Rotor einer elektrischen Maschine. Die Blechpaketscheibe umfasst eine Mehrzahl an Blechpaketscheibensegmenten, wobei jedes Blechpaketscheibensegment an einem ersten distalen Ende ein Verbindungselement und an einem dem ersten distalen Ende gegenüberliegenden zweiten distalen Ende ein Verbindungsgegenelement zum formschlüssigen Verbinden mit dem Verbindungselement eines weiteren Blechpaketscheibensegmentes zur Erzeugung der Blechpaketscheibe aufweist. An den Stirnseiten der beiden distalen Enden eines jeden Blechpaketscheibensegments ist eine Magnetaufnahmeaussparung zur Bildung einer Magnetaufnahmetasche zur Aufnahme eines Magneten ausgebildet.

Die europäische Offenlegungsschrift EP 3 410 571 A1 offenbart einen Blechschnitt für einen Rotor einer elektrischen Maschine, wobei der Blechschnitt ein zentrales Verbindungsmittel für eine Verbindung mit einer Welle aufweist, wobei der Blechschnitt bezüglich einer Radialrichtung einen in einer Umfangsrichtung verlaufenden Außenbereich und einen zwischen dem Außenbereich und dem Verbindungsmittel angeordneten in Umfangsrichtung verlaufenden Innenbereich aufweist, wobei der Außenbereich mehrere, entlang der Umfangsrichtung verteilt angeordnete Magnetpole aufweist. Insbesondere wird eine Geometrie vorgeschlagen, welche elektromagnetisch und mechanisch optimiert ist und eine maximale Leistungsfähigkeit bei minimalem Materialeinsatz und Gewicht und notwendiger Drehzahlfestigkeit aufweist, und um einen Blechschnitt für einen Rotor einer elektrischen Maschine bereitzustellen, welcher eine verbesserte Verbindung des Blechschnitts mit einer Welle, insbesondere einer Rotorwelle, aufweist.

Aufgabe der Erfindung ist es, einen ein Rotorblechpaket für einen Rotor einer elektrischen Maschine zu schaffen, mit dem beim Rotor der elektrischen Maschine mögliche Schwingungen und Geräuschbildung reduziert bzw. vermieden werden kann und ein gleichmäßigerer Lauf ermöglicht wird.

Diese Aufgabe wird gelöst durch ein Rotorblechpaket eines Rotors einer elektrischen Maschine, der die Merkmale des Anspruchs 1 umfasst.

Eine weitere Aufgabe der Erfindung ist es, ein Verfahren zur Herstellung eines Rotorblechpakets aus mehreren Blechringen für einen Rotor einer permanenterregten elektrischen Maschine zu schaffen, so dass bei der elektrischen Maschine mögliche Schwingungen und Geräuschbildung reduziert bzw. vermieden werden kann und ein gleichmäßigerer Lauf ermöglicht wird.

Diese Aufgabe wird gelöst durch ein Verfahren zur Herstellung eines Rotorblechpakets für einen Rotor einer permanenterregten elektrischen Maschine, das die Merkmale des Anspruchs 7 umfasst.

Eine mögliche Ausführungsform eins Rotorblechpakets für einen Rotor einer elektrischen Maschine, wobei der Rotor aus einer Vielzahl von gestapelten Blechringen aufgebaut ist, zeichnet sich dadurch aus, dass mehrere Aufnahmeöffnungen für Permanentmagnete paarweise und V-förmig zueinander in Umfangsrichtung in jedem der Blechringe ausgebildet sind. Ferner sind die Aufnahmeöffnungen für die Permanentmagnete symmetrisch zu einer Symmetrieachse des Blechrings ausgebildet. Zusätzlich sind mehrere Konstruktionselemente homogen und in gleichem Abstand zueinander in Umfangsrichtung im Blechring um einen Winkel in Bezug auf die Symmetrieachse des Blechrings verdreht ausgebildet. Damit ist die Anordnung der Konstruktionselemente nicht symmetrisch zur Symmetrieachse des Blechrings.

Der Vorteil der oben beschriebenen Ausgestaltung des Blechrings ist, dass durch den Zusammenbau des Blechrings oder einer Gruppe von Blechringen zu einem Rotorblechpaket die Konstruktionselemente der ersten beiden Blechringe oder Gruppen von Blechringen eine Verschränkung ausbilden. Der obere Blechring oder die Gruppe der Blechringe wird um 180° um die Symmetrieachse gedreht und verbaut, um das Rotorblechpaket zu bilden. Eine Gruppe von Blechringen ist dadurch definiert, dass zwei oder mehr der individuellen Blechringe in der gleichen Orientierung in axialer Richtung gestapelt werden. Die Durchgänge (Bohrungen) für die Fixiermittel fluchten in axialer Richtung innerhalb einer Gruppe.

Gemäß einer möglichen Ausführungsform der Erfindung kann der Blechring aus mehreren und identischen kreisringförmigen Segmenten bestehen. Jedes der identischen und kreisringförmigen Segmente hat mehrere der paarweise und V-förmig zueinander angeordneten Aufnahmeöffnungen ausgebildet. Mindestens zwei Konstruktionselemente sind derart ausgeformt, dass jedes der Konstruktionselemente um einen Winkel in Bezug auf eine Symmetrieachse der Aufnahmeöffnungen für die Permanentmagnete in Umfangsrichtung verschoben ist.

Der Vorteil der Gestaltung der Blechringe aus den mehreren identischen kreisringförmigen Segmenten ist, dass Fixiermittel durch Konstruktionselemente des Rotorblechpakets geführt werden können, um das Rotorblechpaket auf einem Haltering (oder ähnliches) zu befestigen. Bevorzugt sind die Fixiermittel als Schrauben oder Nieten ausgebildet. Durch die kreisringförmigen Segmente, die den Blechring bilden, kann eine deutlich höhere Ausnutzung des Stanzbleches erreicht werden. Alle Segmente können mit dem geometrisch gleichen Stanzteil hergestellt werden. Jedes der Segmente kann in jeder Lage im Rotorblechpaket verbaut werden. Dies hält das Handling und die Logistik einfach.

Jedes der kreisringförmigen Segmente, mit denen der Blechringe hergestellt werden kann, hat in Umfangsrichtung eine erste Stirnseite mit einem Verbindungsystem und eine zweite Stirnseite mit einem komplementären Verbindungssystem ausgebildet. Gemäß einer vorteilhaften Ausführungsform hat das erste Verbindungssystem ein erstes Verbindungselement, ein zweites Verbindungselement und ein drittes Verbindungselement ausgeformt, die sich in ihrer Form unterscheiden. Das zweite komplementäre Verbindungssystem hat ein erstes komplementäres Verbindungselement, ein zweites komplementäres Verbindungselement und ein drittes komplementäres Verbindungselement ausgeformt, die sich in ihrer Form unterscheiden. Für die Verbindung der einzelnen Segmente zu einem geschlossenen Kreisring, wirkt das erste Verbindungselement mit dem erste komplementären Verbindungselement eines nachfolgenden kreisringförmigen Segments, das zweite Verbindungselement mit dem zweiten komplementären Verbindungselement des nachfolgenden kreisringförmigen Segments und das dritte Verbindungselement mit dem dritten komplementären Verbindungselement des nachfolgenden kreisringförmigen Segments formschlüssig zusammen.

Gemäß einer vorteilhaften Ausführungsform hat jedes der kreisringförmigen Segmente zwei Konstruktionselemente ausgeformt.

Gemäß einer Ausführungsform der Erfindung sind die Konstruktionselemente als Durchgänge für die Aufnahme von jeweils einem Fixiermittel ausgebildet. Die Fixiermittel dienen zur Montage des Rotorblechpakets an einer Haltescheibe.

Gemäß einer möglichen weiteren Ausführungsform der Erfindung sind die Konstruktionselemente als eine Formschlussgeometrie ausgebildet, um die Blechringe aneinander zu halten bzw. den ersten Blechring des Rotorblechpakets an einer Haltescheibe zu befestigen. Die Konstruktionselemente dienen zur Anbindung des Blechrings bzw. der Gruppen der Blechringe an den Rotorträger. Beispielsweise können die Konstruktionselemente als eine Verzahnung des Innendurchmessers, als Formschlussgeometrie oder Ähnliches ausgebildet sein.

Bei der möglichen Ausführungsform, bei der die Konstruktionselemente als Durchgänge bzw. Bohrungen ausgebildet sind, sind die Durchgänge der gestapelten Blechringe bzw. der gestapelten Gruppen an Blechringen mit dem vordefinierten Verschränkungswinkel angeordnet. Trotz des Verschränkungswinkels ist es immer noch möglich, dass in jedem der Durchgänge des Rotorblechpakets jeweils ein Fixiermittel verläuft. Die Fixiermittel (Schraubverbindung oder Nietverbindung) fixieren die räumliche Lage des Rotorblechpakets im Rotor.

Gemäß einer der bevorzugten Ausführungsform der Erfindung werden die Blechringe aus einer Vielzahl von identischen kreisringförmigen Segmenten hergestellt. Durch Verwendung einer Fixierung mittels Verschraubung oder Vernietung, kann dadurch auf Vollringe (durchgehende Blechringe) verzichtet werden. Den größten Vorteil bringt die Segmentierung des Rotorblechpakets (Rotorstacks) in Kombination mit genannter Verschraubung oder Vernietung. Die Schrauben oder Nieten sind radial gleichmäßig im kreisringförmigen Segment verteilt. Ferner versprechen die kreisringförmigen Segmente eine deutlich höhere Ausnutzung des Bleches, aus dem die einzelnen Segmente gestanzt werden. Da alle Segmente aus dem geometrisch gleichen Stanzteil bestehen, kann das Segment beliebig und in jeder Lage im Rotor verbaut werden, was das Handling und die Logistik einfach hält. Durch die vorzugsweise Verwendung der geometrisch identischen Segmente, können die Fertigungskosten minimal gehalten werden.

Unter einer Verschränkung versteht sich die Verdrehung der Einbaulage eines einzelnen Blechrings oder eines Stapels aus identischen Brechringen, die gegen den anderen Blechring oder den anderen Stapel von identischen Blechringen um eine Symmetrieachse gedreht sind. Die Verschränkung hat positive Auswirkungen entgegen möglicher Schwingungen und Geräuschbildung und ermöglicht einen gleichmäßigeren Lauf der elektrischen Maschine.

Ein einfacher Ansatz ist es, die regelmäßigen Durchgänge (Bohrungen) für Schrauben/Niete auf ihrem Lochkreis des Blechrings bzw. des kreisringförmigen Segments um den halben Betrag der Verschränkung zu verschieben. Der zweite (nachfolgende) Blechring bzw. die zweite (nachfolgende) Gruppe von Blechringen wird in umgekehrter Lage eingebaut, so dass sich die Winkelverschiebungen addieren.

Gemäß einer möglichen Ausführungsform kann diese Winkelverschiebung bei den Blechringen bzw. den kreisringförmigen Segmenten 0,4° betragen. Der erste Blechring bzw. die erste Gruppe von Blechringen liegt in einer definierten Lage mit der Unterseite zur Verschraubung auf der Verschraubungsfläche auf.

Auf die Oberseite des ersten (untersten) Blechrings bzw. die erste Gruppe von Blechringen wird daraufhin der zweite (nachfolgende) Blechring bzw. die zweite Gruppe von Blechringen so positioniert, dass beide Oberseiten aufeinander liegen und die Konstruktionselemente (Durchgänge, Bohrungen) zueinander ausgerichtet sind. Durch diese Methode sind die Bohrungen zu einer gemittelten Lage der Bohrungen um 0,4° nach rechts verschoben, wohingegen die Bohrungen des zweiten Blechrings bzw. der zweiten Gruppe von Blechringen um 0,4° nach links verschoben sind. Dadurch ergibt sich eine Verschränkung von 0,8°.

Gemäß einer möglichen Ausführungsform der Erfindung sind die aus den kreisringförmigen Segmenten bestehenden Blechringe derart einzeln oder in Gruppen gestapelt, dass die Stoßstellen der Blechringe in Richtung einer Achse des Rotorblechpakets fluchten.

Gemäß einer möglichen weiteren Ausführungsform der Erfindung sind die aus den kreisringförmigen Segmenten bestehenden Blechringe derart gestapelt, dass Stoßstellen aller Blechringe gegeneinander um einen halben Winkelbetrag des kreisringförmigen Segments versetzt sind.

Gemäß einer noch weiteren Ausführungsform der Erfindung sind die aus den kreisringförmigen Segmenten bestehenden Blechringe in Gruppen gestapelt. In jeweils einer Gruppe sind die aus den kreisringförmigen Segmenten bestehenden Blechringe derart angeordnet, dass die Stoßstellen der Blechringe in Richtung einer Achse des Rotorblechpakets fluchten. Die Gruppen sind derart im Blechpaketstapel angeordnet, dass die Stoßstellen in Richtung der Achse aufeinanderfolgender Gruppen gegeneinander um einen halben Winkelbetrag des kreisringförmigen Segments versetzt sind.

Bei der Stapelung der Blechringe aus den einzelnen, kreisringförmigen Segmenten gibt es verschiedene mögliche Konzepte, wie dies z.B. oben beschrieben wurde (Stoß auf Stoß, oder alternierend segmentiert). Die Verbindung der einzelnen Segmente zum Blechring kann dabei beispielsweise formschlüssig erfolgen. Die einzelnen Segmentebenen können hierbei nach jeder einzelnen Blechlage rotatorisch in ihrer Lage verändert werden, um die Stoßstellen bestmöglich zu verteilen, was einen hohen Handlings-Aufwand mit sich bringt. Eine alternative Ausführungsform wäre es, eine bestimmte Anzahl an segmentierten Blechringen zu einer Gruppe zu stapeln. Die so entstandene Gruppe aus segmentierten Blechringen (mehrere einzelne Blechringe) kann gegenüber einer nachfolgenden Gruppe verdreht werden. Dabei sind die Stoßstellen nicht innerhalb der einzelnen Blechringe der Gruppe verdreht, bilden aber einen guten Kompromiss aus Handling und Verlustminimierung.

Gemäß dem erfindungsgemäßen Verfahren zur Herstellung eines Rotorblechpakets aus mehreren Blechringen für einen Rotor einer permanenterregten elektrischen Maschine, können die folgenden Verfahrensschritte vorgesehen sein:
a) Ausbilden einer Vielzahl von identischen Blechringen, wobei jeder Blechring mehrere Aufnahmeöffnungen für Permanentmagnete ausgebildet hat, die paarweise und V-förmig zueinander in Umfangsrichtung symmetrisch zu einer Symmetrieachse des Blechrings verteilt sind, und wobei mehrere Konstruktionselemente homogen und in gleichen Abstand zueinander in Umfangsrichtung im Blechring um einen Winkel in Bezug auf die Symmetrieachse verdreht ausgebildet sind, so dass die Anordnung der Konstruktionselemente nicht symmetrisch zur Symmetrieachse des Blechrings ist;
b) Drehen eines Blechrings oder eine Gruppe von Blechringen um 180° um die Symmetrieachse;
c) Aufsetzen des gedrehten Blechrings oder der gedrehten Gruppe von Blechringen als nachfolgenden Blechring oder nachfolgende Gruppe von Blechringen auf den vorherigen, nicht gedrehten Blechring oder eine vorherige, nicht gedrehte Gruppe von Blechringen;
d) Aufsetzen eines nicht gedrehten Blechrings oder einer nicht gedrehten Gruppe von Blechringen auf den vorherigen Blechring;
e) Durchführen der Schritte b bis d, bis das Rotorblechpaket fertig ist und das Rotorblechpaket mit jeweils einem Fixiermittel pro Konstruktionselement an einer Haltescheibe fixiert wird.

Gemäß einer bevorzugten Ausführungsform des erfindungsgemäßen Verfahrens, werden die einzelnen Blechringe oder Gruppen von Blechringen derart gestapelt, dass die Konstruktionselemente der Blechringe oder der Gruppen von Blechringen zweier aufeinanderfolgender Blechringe oder Gruppen von Blechringen gegeneinander um einen Verschränkungswinkel in Umfangsrichtung versetzt sind.

Gemäß einer bevorzugten Ausführungsform können die Blechringe aus mehreren kreisringförmigen und identischen Segmenten aufgebaut sein, die aus einem Blech ausgestanzt werden. Dabei hat dann jedes der kreisringförmigen Segmente in Umfangsrichtung an einer ersten Stirnseite ein Verbindungsystem und an einer zweiten Stirnseite ein komplementäres Verbindungssystem ausgebildet. Ferner hat dann jedes der kreisringförmigen Segmente mehrere paarweise und V-förmig zueinander angeordnete Aufnahmeöffnungen für Permanentmagnete und mindestens zwei Konstruktionselemente ausgebildet. Die mindestens zwei Konstruktionselemente sind derart ausgebildet, dass jedes Konstruktionselement um einen halben Verschränkungswinkel in Bezug auf eine Symmetrieachse der Aufnahmeöffnungen für Permanentmagnete in Umfangsrichtung verschoben ist.

Aus einer definierten Anzahl der mehreren kreisringförmigen und identischen Segmente kann ein Blechring dadurch gebildet werden, dass das Verbindungsystem der ersten Stirnseite eines kreisringförmigen Segments formschlüssig mit dem komplementären Verbindungsystem an der zweiten Stirnseite des nachfolgenden kreisringförmigen Segments zusammenwirkt. Die mehreren kreisringförmigen und identischen Segmente für den Blechring können z.B. durch Verklinschen der Segmente verbunden werden

Der Vorteil des erfindungsgemäßen Verfahrens ist, dass bei der Fixierung (Verschraubung oder Vernietung) des Rotorblechpakets kein vollständig zylindrischer Rotorträger notwendig ist. Es reicht wenn für das Rotorblechpaket lediglich ein Zentriersitz ausgebildet ist. Die Zentrierung kann aber auch komplett während der Montage des Rotorblechpakets über ein passendes Werkzeug ausgeführt werden.

Eine weitere Ausführungsform kann sein, den Rotorträger als rohrförmiges Trägerelement vollständig wegzulassen und das Rotorblechpaket an einer Haltescheibe zu befestigen. Daran können auch weitere Teile eines Hybridmoduls befestigt werden. Die Haltescheibe könnte ebenso als Druckplatte der Kupplung genutzt werden. Dadurch steigt der Anteil der Funktionsintegration und der erschlossene radiale Bauraum könnte für eine Drehmomentsteigerung der E-Maschine genutzt werden.

Anhand der beigefügten Zeichnungen werden nun die Erfindung und ihre Vorteile durch Ausführungsbeispiele näher erläutert, ohne dadurch die Erfindung auf das gezeigte Ausführungsbeispiel zu beschränken. Die Größenverhältnisse in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
- **Figur 1**: zeigt eine Draufsicht auf ein Blech, aus dem ein Blechring gemäß dem Stand der Technik für ein Rotorblechpaket ausgestanzt wird.
- **Figur 2**: zeigt eine schematische Draufsicht auf einen Blechring, der aus einer Vielzahl von kreisringförmigen Segmenten gebildet ist.
- **Figur 3**: zeigt eine schematische Draufsicht auf ein Blech; aus dem, gemäß der Erfindung, die kreisringförmigen Segmente für den Blechring der Fig. 3 ausgestanzt werden.
- **Figur 4**: zeigt eine Draufsicht auf einen Blechring, der aus mehreren kreisringförmigen Segmenten gemäß der Erfindung gebildet ist.
- **Figur 5**: zeigt eine Draufsicht auf ein erfindungsgemäßes kreisringförmiges Segment.
- **Figur 6**: zeigt eine Schnittansicht eines montierten Rotorblechpakets.
- **Figur 7**: zeigt in einer Draufsicht auf eines der kreisringförmigen Segmente die Ausbildung der Durchgänge (Bohrungen), um den Verschränkungswinkel zu bilden.
- **Figur 8**: zeigt eine schematische Ansicht von zwei Lagen gestapelter Blechringe oder Gruppen von Blechringen ohne Verschiebung der Konstruktionselemente (Durchgänge).
- **Figur 9**: zeigt eine schematische Ansicht von zwei Lagen gestapelter Blechringe oder Gruppen von Blechringen mit einer Verschiebung der Konstruktionselemente (Durchgänge) nach rechts um den halben Verschränkungswinkel.
- **Figur 10**: zeigt eine schematische Ansicht von zwei Lagen gestapelter Blechringe oder Gruppen von Blechringen mit einer Verschiebung der Konstruktionselemente (Durchgänge) um den ganzen Verschränkungswinkel.
- **Figur 11**: zeigt eine schematische Seitenansicht ohne Verschiebung der Konstruktionselemente (Innenverzahnung).
- **Figur 12**: zeigt eine schematische Seitenansicht der Verschiebung der Konstruktionselemente (Innenverzahnung) nach rechts um den halben Verschränkungswinkel.
- **Figur 13**: zeigt eine schematische Seitenansicht der Verschiebung der Konstruktionselemente (Innenverzahnung) um den Verschränkungswinkel, wobei der oberste Blechring oder die oberste Gruppe von Blechringen um 180° gedreht ist.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die Figuren stellen lediglich Ausführungsbeispiele der Erfindung dar, ohne jedoch die Erfindung auf die dargestellten Ausführungsbeispiele zu beschränken.

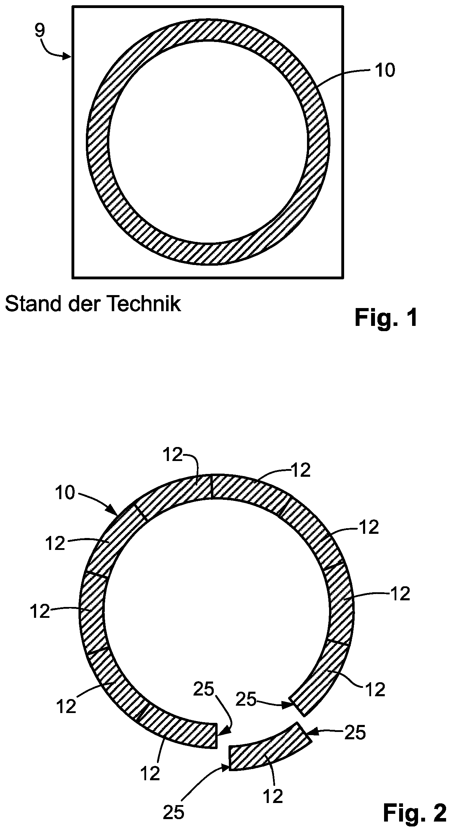

**Figur 1** zeigt eine Draufsicht auf ein Blech 9, aus dem ein Blechring 10 gemäß dem Stand der Technik für den Ausbau eines Rotorblechpakets 1 ausgestanzt wird. Aufgrund der Montagebedingungen, wie z.B. durch Querpressverband, Verschraubung, Vernietung und Ähnlichem, sind die Blechringe 10 des Rotorblechpakets 1 als Vollringe ausgeführt. Dies bedeutet aber enorm hohe Stanzverschnitte bei der Fertigung dieser Vollringe (Einzelbleche).

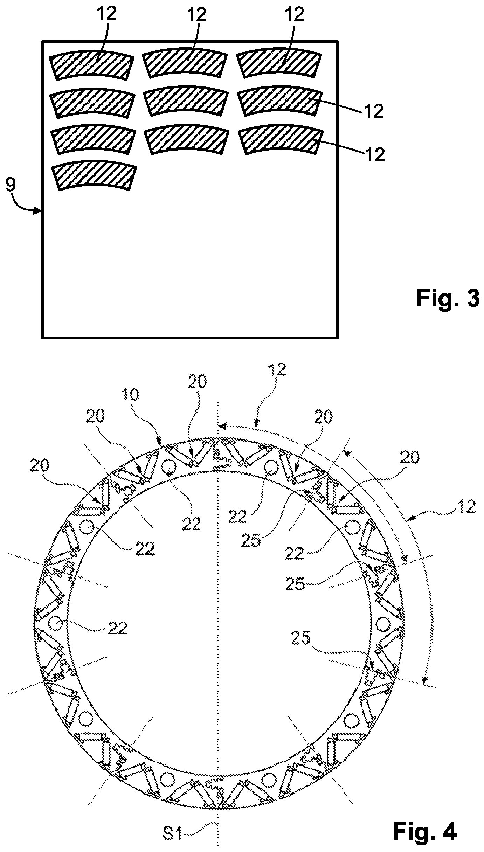

**Figur 2** zeigt eine schematische Draufsicht auf einen Blechring 10, der aus einer Vielzahl von Kreisringsegmenten 12 gebildet ist. In **Figur 3** ist eine schematische Draufsicht auf ein Blech 9 dargestellt, aus dem, gemäß der Erfindung, die Kreisringsegmente 12 für den Blechring 10 der Fig. 3 ausgestanzt werden. Alle der ausgestanzten Kreisringsegmente 12 sind identisch. Aus den Kreisringsegmenten 12 wird der Blechring 10 erstellt. Durch die Anordnung der Kreisringsegmente 12 ist eine deutlich höhere Ausnutzung des Bleches 9 möglich. Es besteht z.B. die Möglichkeit, ein Stanzwerkzeug (nicht dargestellt) mit mehreren Nestern zu verwenden, oder aber das Blech 9 unter dem Stanzwerkzeug zu verschieben. Alle Kreisringsegmente 12 sind geometrisch identisch ausgeführt.

**Figur 4** zeigt eine Draufsicht auf zwei übereinander angeordneter Blechringe 10, die beide aus mehreren kreisringförmigen Segmenten 12 gemäß einer möglichen Ausführungsform der Erfindung gebildet sind. Die Draufsicht zeigt zwei Segmentebenen. Die Kreisringsegmente 12 des oberen Blechrings 10 sind durch die gestrichelten Linien gekennzeichnet. Die kreisringförmigen Segmente 12 des unteren Blechrings 10 sind durch die gestrichelt-gepunkteten Linien gekennzeichnet. Die Konstruktionselemente 22 für die Fixiermittel (hier nicht dargestellt) und die paarweise angeordneten Aufnahmeöffnungen 20 für die Permanentmagnete sind rotationssymmetrisch an jedem der Blechringe 10 verteilt. Bei der hier dargestellten Ausführungsform der kreisringförmigen Segmente 12 sind die Konstruktionselemente 22 als Durchgänge oder Bohrungen ausgebildet, was nicht als Beschränkung der Erfindung aufgefasst werden soll. Bei der hier dargestellten Ausführungsform besteht jeder der Blechringe 10 aus fünf kreisringförmigen Segmenten 12. Der obere Blechring 10 ist gegenüber dem unteren Blechring 10 um einen halben Winkelbereich (Bogenlänge B) des kreisringförmigen Segmentes 12 verdreht.

Aus Figur 4 ist eindeutig zu erkennen, dass trotz der Verdrehung die Konstruktionselemente 22 der gestapelten beiden, aus den kreisringförmigen Segmenten 12 bestehenden, Blechringe 10 fluchten. Ebenso fluchten die paarweise angeordneten Aufnahmeöffnungen 20 für Permanentmagnete (hier nicht dargestellt). Durch die Verdrehung des oberen Blechrings 10 gegenüber dem unteren Blechring 10 sind die Stoßstellen 25 zwischen den kreisringförmigen Segmenten 12 des oberen Blechrings 10 und den kreisringförmigen Segmenten 12 des unteren Blechrings 10 entsprechend verdreht. Der Blechring 10 ist achsensymmetrisch bezüglich der Symmetrieachse S1.

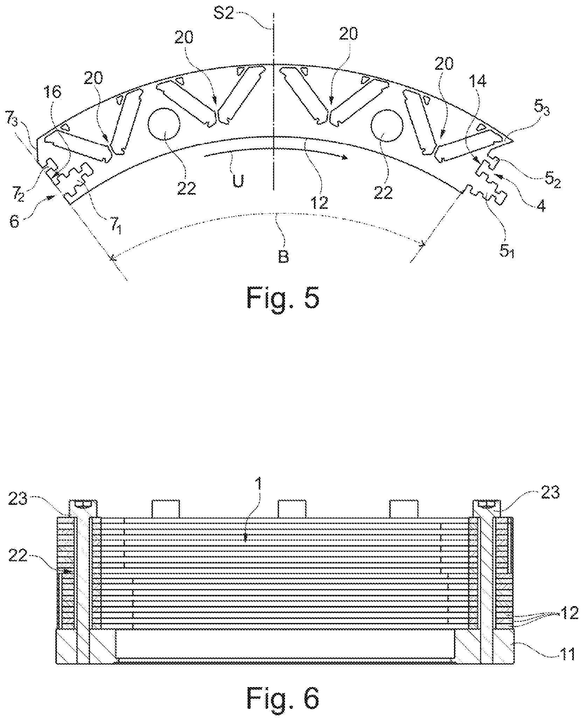

**Figur 5** zeigt eine Draufsicht auf eine mögliche Ausführungsform eines erfindungsgemäßen kreisringförmigen Segments 12. Jedes kreisringförmige Segment 12 weist in Umfangsrichtung U eine erste Stirnseite 14 mit einem Verbindungsystem 4 auf. Ferner weist das kreisringförmige Segment 12 eine zweite Stirnseite 16 auf. Die erste Stirnseite 14 hat ein Verbindungsystem 4 ausgebildet, dass während des Stanzprozesses gebildet wird. Die zweite Stirnseite 16 hat ein zum Verbindungssystem 4 komplementäres Verbindungsystem 6 ausgebildet, das ebenfalls während des Stanzprozesses gebildet wird.

Bei der hier dargestellten Ausführungsform, welche nicht als Beschränkung der Erfindung aufgefasst werden soll, besteht das erste Verbindungssystem 4 aus einem ersten Verbindungselement 5₁, einem zweiten Verbindungselement 5₂ und einem dritten Verbindungselement 5s, die sich in ihrer Form unterscheiden. Das zweite Verbindungssystem 6 besteht aus einem ersten komplementären Verbindungselement 7₁, einem zweiten komplementären Verbindungselement 7₂ und einem dritten komplementären Verbindungselement 7s, die sich ebenfalls in ihrer Form unterscheiden. Das erste Verbindungselement 5₁ wirkt mit dem ersten komplementären Verbindungselement 7₁ eines nachfolgenden kreisringförmigen Segments 12 formschlüssig zusammen. Das zweite Verbindungselement 5₂ wirkt mit dem zweiten komplementären Verbindungselement 7₂ des nachfolgenden kreisringförmigen Segments 12 formschlüssig zusammen. Das dritte Verbindungselement 5₃ wirkt mit dem dritten komplementären Verbindungselement 7₃ des nachfolgenden kreisringförmigen Segmentes 12 formschlüssig zusammen.

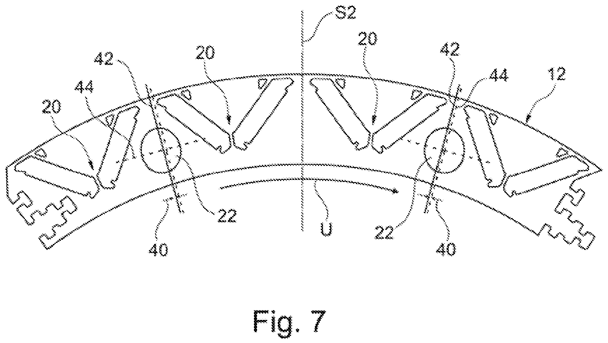

Jedes der kreisringförmigen Segmente 12 besitzt die ausgestanzten Aufnahmeöffnungen 20 für die Permanentmagnete, welche alle achsensymmetrisch zu einer Symmetrieachse S2 des kreisringförmigen Segments 12 angeordnet sind. Die mehreren Konstruktionselemente 22 sind aufgrund der Verschiebung um den Verschränkungswinkel 40 (siehe Fig. 7) nicht achsensymmetrisch um die Symmetrieachse S2 des kreisringförmigen Segments 12 angeordnet. Ferner sind die Aufnahmeöffnungen 20 für Permanentmagnete und die mehreren Konstruktionselemente 22 homogen entlang einer Bogenlänge B des kreisringförmigen Segments 12 angeordnet.

**Figur 6** zeigt eine Schnittansicht eines montierten Rotorblechpakets 1. Bei der hier gezeigten Ausführungsform ist der Rotorträger als rohrförmiges Trägerelement vollständig wegzulassen und das Rotorblechpaket 1 ist an der Haltescheibe 11 befestig. Die Fixiermittel 23 sind als Schrauben ausgeführt. Die Schrauben verlaufen in den Konstruktionselementen 22 der gestapelten Blechringe 10 bzw. der gestapelten Gruppen von Blechringen 10 und wirken zur Fixierung des Rotorblechpakets 1 mit der Haltescheibe 11 zusammen.

**Figur 7** zeigt eine Draufsicht auf eines der kreisringförmigen Segmente 12, bei der die Ausbildung der Konstruktionselemente 22 (wie z.B. Durchgänge, Bohrungen) um einen Verschränkungswinkel 40 versetzt ist. Die durchgezogene Linie 42 markiert die Mitte zwischen den Aufnahmeöffnungen 20 für die Permanentmagnete. Das gestrichelte Kreuz 44 markiert die Mitte des Konstruktionselements 22. Bei der hier dargestellten Ausführungsform hat das kreisringförmige Segment 12 zwei Konstruktionselemente 22 ausgebildet, die homogen und in gleichen Abstand zueinander in Umfangsrichtung U angeordnet sind. Die Konstruktionselemente 22 sind um einen Winkel 40 in Bezug auf die Mittellinie 42 der Aufnahmeöffnungen 20 für die Permanentmagnete angeordnet. Die Verdrehung der Konstruktionselemente 22 des kreisringförmigen Segments 12 um den Winkel 40 wird aus der Abweichung des die Mitte des Konstruktionselements 22 markierenden Kreuzes 44 und der Mittellinie 42 der Aufnahmeöffnungen 20 für die Permanentmagnete deutlich. Der Winkel 40 der Verdrehung ist als der halbe Verschränkungswinkel definiert.

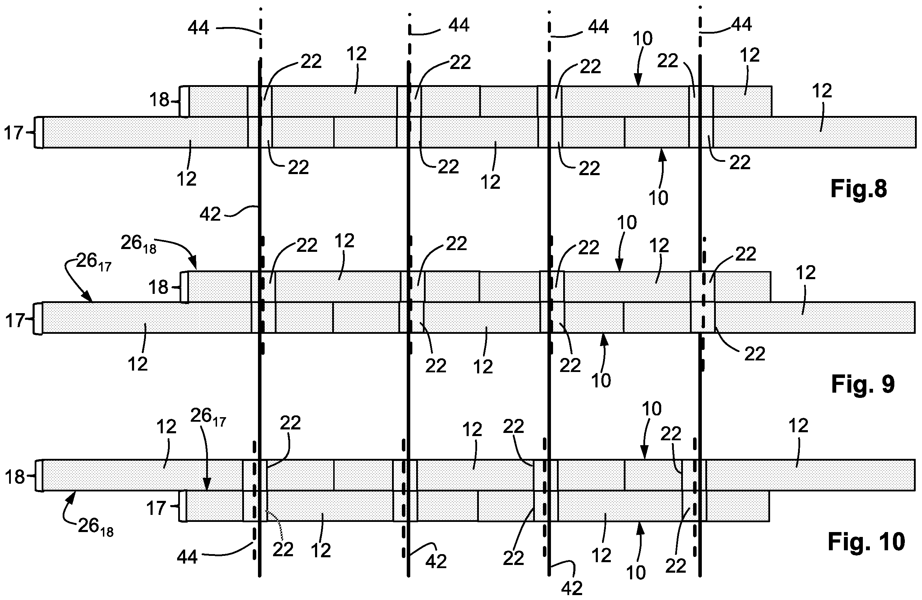

**Figur 8** zeigt eine schematische Ansicht von einer ersten, untersten Lage 17 und einer zweiten, obersten Lage 18 gestapelter und aus kreisringförmigen Segmenten 12 bestehender Blechringe 10 oder Gruppen von Blechringen 10. Hier existiert keine Verschiebung der Konstruktionselemente 22 der kreisringförmigen Segmente 12 (Durchgänge) gegenüber der Mittellinie (repräsentiert hier durch die durchgezogene Linie 42) der Aufnahmeöffnungen 20 (hier nicht dargestellt) für Permanentmagnete. Der Winkel 40 ist gleich Null und die durchgezogene Linie 42 fällt mit der gestrichelten Linie 44, welche die Mitte des Konstruktionselements 22 markiert, zusammen.

**Figur 9** zeigt eine schematische Ansicht von zwei Lagen 17 und 18 gestapelter Blechringe 10 oder Gruppen von Blechringen 10 mit einer Verschiebung der Konstruktionselemente 22 (Durchgänge) nach rechts um den halben Winkel 40. Die Verschiebung der Konstruktionselemente 22 der kreisringförmigen Segmente 12 (Durchgänge) gegenüber der Mittellinie (repräsentiert hier durch die durchgezogene Linie 42) der Aufnahmeöffnungen 20 für Permanentmagnete wird dadurch verdeutlicht, dass die durchgezogene Linie 42 nicht mit der gestrichelten Linie 44, welche die Mitte des Konstruktionselements 22 markiert, zusammenfällt.

**Figur 10** zeigt eine schematische Ansicht von zwei Lagen 17 und 18 gestapelter Blechringe 10 oder Gruppen von Blechringen 10 mit einer Verschiebung der Konstruktionselemente 22 (Durchgänge) um den Winkel 40 (Verschränkungswinkel). Die Verschiebung bzw. Verdrehung um den Winkel 40 wird dadurch erreicht, dass der oberste Blechring 10 (oberste Lage 18) bzw. die oberste Gruppe (oberste Lage 18) aus Blechringen 10 mit einer Oberseite 26₁₈ auf die Oberseite 26₁₇ des unteren Blechrings 10 (unterste Lage 17) bzw. die untere Gruppe (unterste Lage 17) aus Blechringen 10 aufgesetzt wird. Dies wird dadurch erreicht, dass der oberste Blechring 10 (oberste Lage 18) bzw. die oberste Gruppe (oberste Lage 18) aus Blechringen 10 um die Symmetrieachse S1 (siehe Fig. 4) um 180° gedreht wird.

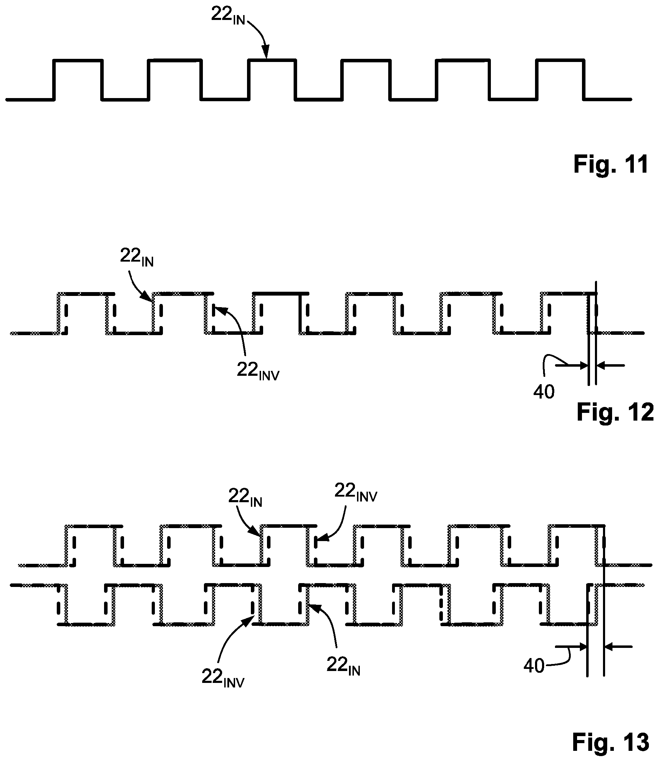

**Figur 11** zeigt eine schematische Seitenansicht, wobei keine Verschiebung der Konstruktionselemente 22 des Blechrings 10 (nicht dargestellt) bzw. der kreisringförmigen Segmente 12 (nicht dargestellt) des Blechrings 10, die als Innenverzahnung 22_{IN} ausgebildet sind, erfolgte. Folglich ist der Winkel 40 gleich Null.

**Figur 12** zeigt eine schematische Seitenansicht der Verschiebung der Konstruktionselemente (Innenverzahnung) 22_{INV} nach rechts um den halben Winkel 40 (Verschränkungswinkel). Der Winkel 40 ergibt sich aus dem Vergleich der nicht verschobenen Innenverzahnung 22_{IN} und der verschobenen Innenverzahnung 22_{INV}. Die Verschiebung erfolgt in analoger Weise, wie dies bereits in der Beschreibung zu Figur 9 erläutert wurde.

**Figur 13** zeigt eine schematische Seitenansicht der Verschiebung der Konstruktionselemente (Innenverzahnung) 22_{INV} um den Winkel 40 (voller Verschränkungswinkel). Analog zu der Beschreibung zu Figur 10 wurde der oberste Blechring 10 oder die oberste Gruppe von Blechringen 10 um 180° gedreht. Als Ergebnis resultiert der Winkel 40 (voller Verschränkungswinkel), der sich aus dem Vergleich der nicht verschobenen Innenverzahnung 22_{IN} und der verschobenen Innenverzahnung 22_{INV} der beiden Blechringe 10 bzw. der beiden Gruppen der Blechringe 10 ergibt.

Es wird angenommen, dass die vorliegende Offenbarung und viele der darin erwähnten Vorteile durch die vorhergehende Beschreibung verständlich werden. Es ist offensichtlich, dass verschiedene Änderungen in Form, Konstruktion und Anordnung der Bauteile durchgeführt werden können, ohne von dem offenbarten Gegenstand abzuweichen. Die beschriebene Form ist lediglich erklärend, und es ist die Absicht der beigefügten Ansprüche, solche Änderungen zu umfassen und einzuschließen. Dementsprechend sollte der Umfang der Erfindung nur durch die beigefügten Ansprüche beschränkt sein.

### Bezugszeichenliste

- 1: Rotorblechpaket
- 4: Verbindungssystem
- 5₁: erstes Verbindungselement
- 5₂: zweites Verbindungselement
- 5₃: drittes Verbindungselement
- 6: komplementäres Verbindungssystem
- 7₁: erstes komplementäres Verbindungselement
- 7₂: zweites komplementäres Verbindungselement
- 7s: drittes komplementäres Verbindungselement
- 9: Blech
- 10: Blechring
- 11: Haltescheibe
- 12: kreisringförmiges Segment
- 14: erste Stirnseite
- 16: zweite Stirnseite
- 17: erste bzw. unterste Lage
- 18: zweite bzw. oberste Lage
- 20: Aufnahmeöffnungen für Permanentmagnete
- 22: Konstruktionselemente
- 22_{IN}: Innenverzahnung
- 22_{INV}: verschobene Innenverzahnung
- 23: Fixiermittel
- 25: Stoßstelle
- 26₁₇: Oberseite
- 26₁₈: Oberseite
- 40: Verschränkungswinkel; Winkel
- 42: durchgezogene Linie
- 44: gestricheltes Kreuz, gestrichelte Linie
- B: Bogenlänge
- S1: Symmetrieachse des Blechrings
- S2: Symmetrieachse des Blechrings
- U: Umfangsrichtung

## Patentansprüche

1. Rotorblechpaket (1) für einen Rotor einer elektrischen Maschine, das aus einer Vielzahl von gestapelten Blechringen (10) aufgebaut ist, wobei mehrere Aufnahmeöffnungen (20) für Permanentmagnete paarweise, V-förmig zueinander in Umfangsrichtung (U) und symmetrisch zu einer Symmetrieachse (S1) verteilt in jedem der Blechringe (10) ausgebildet sind; wobei mehrere Konstruktionselemente (22) homogen und in gleichen Abstand zueinander in Umfangsrichtung (U) in jedem der Blechringe (10) um einen Winkel (40) in Bezug auf die Symmetrieachse (S1) verdreht ausgebildet sind, so dass die Anordnung der Konstruktionselemente (22) nicht symmetrisch zur Symmetrieachse (S1) des Blechrings (10) ist
**dadurch gekennzeichnet, dass**
das Rotorblechpaket eine um 180° um die Symmetrieachse (S1) gedrehten Blechring (10) oder eine Gruppe von Blechringen (10) sowie eine nicht gedrehten Blechring (10) oder eine nicht gedrehte Gruppe von Blechringen (10) umfasst, wobei der gedrehte Blechring (10) oder Gruppe von Blechringen (10) auf dem nicht gedrehten Blechring (10) oder nicht gedrehten Gruppe von Blechringen (10) aufsitzt.

2. Rotorblechpaket (1) nach Anspruch 1, wobei der Blechring (10) aus mehreren und identischen kreisringförmigen Segmenten (12) besteht, die jeweils mehrere der paarweise und V-förmig zueinander angeordneten Aufnahmeöffnungen (20) und mindestens zwei Konstruktionselemente (22) derart ausgeformt haben, dass jedes der Konstruktionselemente (22) um einen Winkel (40) in Bezug auf eine Mittellinie (42) der Aufnahmeöffnungen (20) für Permanentmagnete im Umfangsrichtung (U) verschoben ist.

3. Rotorblechpaket (1) nach Anspruch 2, wobei jedes der kreisringförmigen Segmente (12) zur Herstellung der Blechringe (10) in Umfangsrichtung (U) eine erste Stirnseite (14) mit einem Verbindungsystem (4) und eine zweite Stirnseite (16) mit einem komplementären Verbindungssystem (6) aufweist.

4. Rotorblechpaket (1) nach einem der vorangehenden Ansprüche 2 bis 3, wobei jedes der kreisringförmigen Segmente (12) zwei Konstruktionselemente (22) ausgeformt hat.

5. Rotorblechpaket (1) nach einem der vorangehenden Ansprüche 1 bis 4, wobei die Konstruktionselemente (22) als Durchgänge für die Aufnahme von jeweils einem Fixiermittel (23) zur Montage des Rotorblechpakets (1) an einer Haltescheibe (11) ausgebildet sind.

6. Rotorblechpaket (1) nach einem der vorangehenden Ansprüche 1 bis 4, wobei die Konstruktionselemente (22) eine Formschlussgeometrie ausgebildet haben, um die Blechringe (10) aneinander zu haltern bzw. um den ersten Blechring (10) des Rotorblechpakets (1) an einer Haltescheibe (11) zu befestigen.

7. Verfahren zur Herstellung eines Rotorblechpakets (1) aus mehreren Blechringen (10) für einen Rotor einer permanenterregten elektrischen Maschine, umfassend die folgenden Schritte:
a) Ausbilden einer Vielzahl von identischen Blechringen (10), wobei jeder Blechring (10) mehrere Aufnahmeöffnungen (20) für Permanentmagnete ausgebildet hat, die paarweise und V-förmig zueinander in Umfangsrichtung (U) symmetrisch zu einer Symmetrieachse (S1) des Blechrings (10) verteilt sind, und wobei mehrere Konstruktionselemente (22) homogen und in gleichen Abstand zueinander in Umfangsrichtung (U) im Blechring (10) um einen Winkel (40) in Bezug auf die Symmetrieachse (S1) verdreht ausgebildet sind, so dass die Anordnung der Konstruktionselemente (22) nicht symmetrisch zur Symmetrieachse (S1) des Blechrings (10) ist;
b) Drehen eines Blechrings (10) oder eine Gruppe von Blechringen (10) um 180° um die Symmetrieachse (S1);
c) Aufsetzen des gedrehten Blechrings (10) oder der gedrehten Gruppe von Blechringen (10) als nachfolgenden Blechring (10) oder nachfolgende Gruppe von Blechringen (10) auf den vorherigen, nicht gedrehten Blechring (10) oder eine vorherige, nicht gedrehte Gruppe von Blechringen (10);
d) Aufsetzen eines nicht gedrehten Blechrings (10) oder einer nicht gedrehten Gruppe von Blechringen (10) auf den vorherigen Blechring (10);
e) Durchführen der Schritte b bis d, bis das Rotorblechpaket (1) fertig ist und das Rotorblechpaket (1) mit jeweils einem Fixiermittel (23) pro Konstruktionselement (22) an einer Haltescheibe (11) fixiert wird.

8. Verfahren nach Anspruch 7 wobei die einzelnen Blechringe (10) oder Gruppen von Blechringen (10) derart gestapelt werden, dass die Konstruktionselemente (22) der Blechringe (10) oder der Gruppen von Blechringen (10) zweier aufeinanderfolgender Blechringe (10) oder Gruppen von Blechringen (10) gegeneinander um einen Verschränkungswinkel (40) in Umfangsrichtung versetzt sind.

9. Verfahren nach einem der vorangehenden Ansprüche 7 bis 8, wobei mehrere kreisringförmige und identische Segmente (12) aus einem Blech (9) ausgestanzt werden, so dass jedes der kreisringförmigen Segmente (12) in Umfangsrichtung (U) an einer ersten Stirnseite (14) ein Verbindungsystem (4), an einer zweiten Stirnseite (16) ein komplementäres Verbindungssystem (6), mehrere paarweise und V-förmig zueinander angeordnete Aufnahmeöffnungen (20) für Permanentmagnete und mindestens zwei Konstruktionselemente (22) ausgebildet hat; wobei die mindestens zwei Konstruktionselemente (22) derart ausgebildet sind, dass jedes Konstruktionselement (22) um einen halben Verschränkungswinkel (40) in Bezug auf eine Symmetrieachse (S2) der Aufnahmeöffnungen (20) für Permanentmagnete in Umfangsrichtung (U) verschoben ist.

10. Verfahren nach Anspruch 9, wobei aus einer definierten Anzahl der mehreren kreisringförmigen und identischen Segmente (12) ein Blechring (10) dadurch gebildet wird, dass das Verbindungsystem (4) der ersten Stirnseite (14) eines kreisringförmigen Segments (12) formschlüssig mit dem komplementären Verbindungsystem (4) an der zweiten Stirnseite (16) des nachfolgenden kreisringförmigen Segments (12) zusammenwirkt.

## Claims

1. A laminated rotor core (1) for a rotor of an electric machine, which is constructed from a plurality of stacked lamination rings (10), wherein a plurality of receiving openings (20) for permanent magnets are formed in pairs, distributed in a V-shape relative to one another in the circumferential direction (U) and symmetrically to an axis of symmetry (S1) in each of the lamination rings (10); wherein a plurality of structural elements (22) are formed homogeneously and at the same distance from one another in the circumferential direction (U) in each of the lamination rings (10) rotated by an angle (40) with respect to the axis of symmetry (S1), so that the arrangement of the structural elements (22) is not symmetrical to the axis of symmetry (S1) of the lamination ring (10),
**characterized in that**
the laminated rotor core comprises a lamination ring (10) or a group of lamination rings (10) rotated by 180° about the axis of symmetry (S1) and a non-rotated lamination ring (10) or a non-rotated group of lamination rings (10), wherein the rotated lamination ring (10) or group of lamination rings (10) sits on the non-rotated lamination ring (10) or non-rotated group of lamination rings (10).

2. The laminated rotor core (1) according to claim 1, wherein the lamination ring (10) consists of a plurality of identical annular segments (12), each of which has a plurality of the receiving openings (20) arranged in pairs and in a V-shape relative to one another and at least two structural elements (22) formed in such a manner that each of the structural elements (22) is displaced by an angle (40) relative to a centre line (42) of the receiving openings (20) for permanent magnets in the circumferential direction (U).

3. The laminated rotor core (1) according to claim 2, wherein each of the annular segments (12) for producing the lamination rings (10) has, in the circumferential direction (U), a first end face (14) with a connection system (4) and a second end face (16) with a complementary connection system (6).

4. The laminated rotor core (1) according to any one of the preceding claims 2 to 3,
wherein each of the annular segments (12) has two structural elements (22) formed thereon.

5. The laminated rotor core (1) according to any one of the preceding claims 1 to 4, wherein the structural elements (22) are designed as passages for receiving a respective fixing means (23) for mounting the laminated rotor core (1) on a holding disc (11).

6. The laminated rotor core (1) according to any one of the preceding claims 1 to 4, wherein the structural elements (22) have a form-fitting geometry to hold the lamination rings (10) together or to secure the first lamination ring (10) of the laminated rotor core (1) to a holding disc (11).

7. A method for producing a laminated rotor core (1) from a plurality of lamination rings (10) for a rotor of a permanently excited electric machine, comprising the following steps:
a) forming a plurality of identical lamination rings (10), wherein each lamination ring (10) has a plurality of receiving openings (20) for permanent magnets, which are distributed in pairs and in a V-shape to one another in the circumferential direction (U) symmetrically to an axis of symmetry (S1) of the lamination ring (10), and wherein a plurality of structural elements (22) is formed homogeneously in the lamination ring (10) and at the same distance from one another in the circumferential direction (U), rotated by an angle (40) with respect to the axis of symmetry (S1), such that the arrangement of the structural elements (22) is not symmetrical to the axis of symmetry (S1) of the lamination ring (10);
b) rotating a lamination ring (10) or a group of lamination rings (10) by 180° about the axis of symmetry (S1);
c) placing the rotated lamination ring (10) or the rotated group of lamination rings (10) as a subsequent lamination ring (10) or subsequent group of lamination rings (10) on the previous, non-rotated lamination ring (10) or a previous, non-rotated group of lamination rings (10);
d) placing a non-rotated lamination ring (10) or a non-rotated group of lamination rings (10) on the previous lamination ring (10);
e) carrying out steps b to d until the laminated rotor core (1) is finished and the laminated rotor core (1) is fixed to a holding disc (11) with one fixing means (23) for each structural element (22).

8. The method according to claim 7, wherein the individual lamination rings (10) or groups of lamination rings (10) are stacked in such a way that the structural elements (22) of the lamination rings (10) or the groups of lamination rings (10) of two consecutive lamination rings (10) or groups of lamination rings (10) are offset from one another by an angle of entanglement (40) in the circumferential direction.

9. The method according to any one of the preceding claims 7 to 8, wherein a plurality of annular and identical segments (12) are punched out of a metal sheet (9), such that in the circumferential direction (U) each of the annular segments (12) has a connection system (4) on a first end face (14), a complementary connection system (6) on a second end face (16), a plurality of receiving openings (20) for permanent magnets arranged in pairs and in a V-shape relative to one another, and at least two structural elements (22); wherein the at least two structural elements (22) are designed such that each structural element (22) is displaced by half an angle of entanglement (40) in relation to an axis of symmetry (S2) of the receiving openings (20) for permanent magnets in the circumferential direction (U).

10. The method according to claim 9, wherein a lamination ring (10) is formed from a defined number of the plurality of annular and identical segments (12) in that the connection system (4) of the first end face (14) of an annular segment (12) interacts in a form-fitting manner with the complementary connection system (4) on the second end face (16) of the subsequent annular segment (12).

## Revendications

1. Paquet de tôles rotoriques (1) pour un rotor d'une machine électrique, qui est constitué d'une pluralité d'anneaux en tôle (10) empilés, plusieurs ouvertures de réception (20) pour des aimants permanents étant réalisées de manière à être réparties par paires, en forme de V les unes par rapport aux autres dans la direction circonférentielle (U) et de façon symétrique par rapport à un axe de symétrie (S1) dans chacun des anneaux en tôle (10) ; plusieurs éléments de construction (22) étant réalisés de manière homogène et à égale distance les uns des autres dans la direction circonférentielle (U) dans chacun des anneaux en tôle (10), en étant tournés d'un angle (40) par rapport à l'axe de symétrie (S1), de façon que l'agencement des éléments de construction (22) ne soit pas symétrique par rapport à l'axe de symétrie (S1) de l'anneau en tôle (10),
**caractérisé en ce que**
le paquet de tôles rotoriques comprend un anneau en tôle (10) ou un groupe d'anneaux en tôle (10) tourné(s) de 180 ° autour de l'axe de symétrie (S1) et un anneau en tôle non tourné (10) ou groupe d'anneaux en tôle non tournés (10), l'anneau en tôle (10) ou le groupe d'anneaux en tôle (10) tourné(s) repose sur l'anneau en tôle non tourné (10) ou le groupe d'anneaux en tôle non tournés (10).

2. Paquet de tôles rotoriques (1) selon la revendication 1, dans lequel l'anneau en tôle (10) est constitué de plusieurs segments annulaires (12) identiques, dont chacun présente plusieurs des ouvertures de réception (20) agencées par paires et en forme de V les unes par rapport aux autres et au moins deux éléments de construction (22) formés de façon que chacun des éléments de construction (22) soit déplacé d'un angle (40) dans la direction circonférentielle (U) par rapport à une ligne médiane (42) des ouvertures de réception (20) pour des aimants permanents.

3. Paquet de tôles rotoriques (1) selon la revendication 2, dans lequel chacun des segments annulaires (12) pour réaliser les anneaux en tôle (10) dans la direction circonférentielle (U) présente une première face frontale (14) avec un système de liaison (4) et une seconde face frontale (16) avec un système de liaison (6) complémentaire.

4. Paquet de tôles rotoriques (1) selon l'une quelconque des revendications précédentes 2 à 3, dans lequel chacun des segments annulaires (12) a formé deux éléments de construction (22).

5. Paquet de tôles rotoriques (1) selon l'une quelconque des revendications précédentes 1 à 4, dans lequel les éléments de construction (22) sont conçus comme des passages pour recevoir respectivement un moyen de fixation (23) destiné au montage du paquet de tôles rotoriques (1) sur un disque de support (11).

6. Paquet de tôles rotoriques (1) selon l'une quelconque des revendications précédentes 1 à 4, dans lequel les éléments de construction (22) ont formé une géométrie de complémentarité de forme afin de maintenir ensemble les anneaux en tôle (10) ou pour fixer le premier anneau en tôle (10) du paquet de tôles rotoriques (1) à un disque de support (11).

7. Procédé de réalisation d'un paquet de tôles rotoriques (1) à partir de plusieurs anneaux en tôle (10) pour un rotor d'une machine électrique à excitation permanente, comprenant les étapes suivantes consistant à :
a) former une pluralité d'anneaux en tôle (10) identiques, chaque anneau en tôle (10) ayant formé une pluralité d'ouvertures de réception (20) pour des aimants permanents, qui sont réparties par paires et en forme de V les unes par rapport aux autres dans la direction circonférentielle (U) et de façon symétrique par rapport à un axe de symétrie (S1) de l'anneau en tôle (10), et plusieurs éléments de construction (22) étant formés de manière homogène et à égale distance les uns des autres dans la direction circonférentielle (U) dans l'anneau en tôle (10) tourné d'un angle (40) par rapport à l'axe de symétrie (S1), de façon que l'agencement des éléments de construction (22) ne soit pas symétrique par rapport à l'axe de symétrie (S1) de l'anneau en tôle (10) ;
b) faire tourner un anneau en tôle (10) ou un groupe d'anneaux en tôle (10) de 180° autour de l'axe de symétrie (S1) ;
c) placer l'anneau en tôle tourné (10) ou le groupe d'anneaux en tôle tournés (10) en tant qu'anneau en tôle (10) suivant ou groupe d'anneaux en tôle (10) suivant sur l'anneau en tôle (10) non tourné précédent ou sur un groupe d'anneaux en tôle (10) non tourné précédent ;
d) placer un anneau en tôle (10) non tourné ou un groupe d'anneaux en tôle (10) non tournés sur l'anneau en tôle (10) précédent ;
e) réaliser les étapes b à d jusqu'à ce que le paquet de tôles rotoriques (1) soit terminé et que le paquet de tôles rotoriques (1) soit fixé à un disque de support (11) avec respectivement un moyen de fixation (23) par élément de construction (22).

8. Procédé selon la revendication 7, dans lequel les anneaux en tôle (10) individuels ou les groupes d'anneaux en tôle (10) sont empilés de façon que les éléments de construction (22) des anneaux en tôle (10) ou des groupes d'anneaux en tôle (10) de deux anneaux en tôle (10) ou groupes d'anneaux en tôle (10) successifs soient décalés les uns par rapport aux autres d'un angle de décalage (40) dans la direction circonférentielle.

9. Procédé selon l'une quelconque des revendications précédentes 7 à 8, dans lequel plusieurs segments annulaires (12) identiques sont découpés dans une tôle (9), de façon que chacun des segments annulaires (12) a formé, dans la direction circonférentielle (U), sur une première face frontale (14), un système de liaison (4), sur une seconde face frontale (16), un système de liaison complémentaire (6), plusieurs ouvertures de réception (20) pour des aimants permanents, agencées par paires et en forme de V les unes par rapport aux autres et au moins deux éléments de construction (22) ; les au moins deux éléments de construction (22) étant conçus de façon que chaque élément de construction (22) soit déplacé d'un demi-angle de décalage (40) dans la direction circonférentielle (U) par rapport à un axe de symétrie (S2) des ouvertures de réception (20) pour des aimants permanents.

10. Procédé selon la revendication 9, dans lequel un anneau en tôle (10) est formé à partir d'un nombre défini de plusieurs segments annulaires (12) identiques, en ce que le système de liaison (4) de la première face frontale (14) d'un segment annulaire (12) coopère par complémentarité de forme avec le système de liaison (4) complémentaire sur la seconde face frontale (16) du segment annulaire (12) suivant.
